# EUROPÄISCHE PATENTANMELDUNG

(11) **EP 1 152 569 A2**
(43) Veröffentlichungstag der Anmeldung: **07.11.2001**
(21) Anmeldenummer: 01110783.6
(22) Anmeldetag: 03.05.2001
(51) Int. Cl.: H04L 12/24

(54) **Verfahren zur Erkennung von aktiven und passiven Komponenten in Netzwerken**

(30) Priorität: 03.05.2000 DE 20007952 U
(71) Anmelder: Nowak, Nick, 25594 Vaalermoor (DE)
(72) Erfinder: Nowak, Nick, 25594 Vaalermoor (DE)
(74) Vertreter: Patentanwälte Wenzel & Kalkoff

(57) **Zusammenfassung**

Bei bekannten Verfahren müssen im Falle einer Überprüfung der Netzwerkstruktur sämtliche aktive und passive Enddosen in Augenschein genommen werden, um den aktuellen Belegungszustand festzustellen.

Mit dem erfindungsgemäßen Verfahren bzw. der Vorrichtung zur Durchführung desselben wird durch die Schritte: Kennzeichnen mindestens der passiven Komponenten mit einem Identifikationscode, Abfragen einer oder jeder passiven Komponente nach dem aktuellen Belegungszustands mittels eines Schnittstellenmoduls, Umsetzen der Informationen aus der Abfrage in Datenbanken und Anzeigen der informationen in einem gewünschten Format gewährleistet, daß zusätzlich zu den ohnehin identifizierbaren aktiven Komponenten auch die passiven Komponenten zentral erkannt und zugeordnet werden können.

## Beschreibung

Die Erfindung befaßt sich mit einem Verfahren zur Erkennung von aktiven und passiven Komponenten, insbesondere im Bereich von Netzwerken. Des weiteren betrifft die Erfindung eine Vorrichtung zur Erkennung von aktiven und passiven Komponenten, insbesondere im Bereich von Netzwerken, im wesentlichen umfassend mindestens einen Server, mindestens ein Weichenelement zur Anbindung von mindestens vier Enddosen an den Server sowie mindestens ein Patchfeld jeweils mit mehreren Anschlüssen.

Derartige Verfahren und Vorrichtungen werden insbesondere in der Netzwerktechnologie eingesetzt, wenn eine Vielzahl von Anwendern auf einen oder mehrere Server Zugriff haben soll, wobei als Anwender auch aktive Elemente/Endgeräte und Unterstationen angesehen werden. Üblicherweise befindet sich eine Serverstation in einem zentralen Rechenzentrum. Der Zugriff auf den Server erfolgt von unterschiedlichen Anwendern in unterschiedlichen Räumen, beispielsweise auf verschiedenen Etagen eines Bürogebäudes. In jedem Raum befinden sich in der Regel mehrere Enddosen, so daß wahlweise oder gleichzeitig beispielsweise mehrere PC's und/oder Telefone und dergleichen angeschlossen werden können. Häufig sind jedoch nicht alle Enddosen belegt, d.h. sie weisen kein aktives Element auf. Gerade diese freien Enddosen sind jedoch durch eine übergeordnete Managementsoftware oder andere Steuerungssysteme nicht erkennbar. Bei einer Überprüfung/Überwachung oder Neustrukturierung der Netzwerkstruktur, z.B. durch räumliche oder personelle Veränderung, ist es daher erforderlich, daß eine Person jede einzelne Enddose in Augenschein nimmt, um den aktuellen Belegungszustand zu prüfen und zu dokumentieren. Der Nachteil dieses bisher angewendeten Verfahrens mit den dafür bekannten Vorrichtungen liegt darin, daß das Vorgehen sehr personal- und zeitaufwendig und damit kostenintensiv ist. Weiterhin weisen manuell erstellte Dokumentationen eine hohe Fehlerquote auf.

Aufgabe der Erfindung ist es deshalb, eine Vorrichtung zu schaffen, die die Überwachung, Überprüfung und Dokumentation von Netzwerkstrukturen vereinfacht. Des weiteren ist es Aufgabe der Erfindung, ein Verfahren vorzuschlagen, mit dem die Belegung von Enddosen in einer Netzwerkstruktur auf einfache Weise überwacht und dokumentiert werden kann.

Die Aufgabe wird durch ein Verfahren der eingangs erwähnten Art durch folgende Schritte gelöst, nämlich
- Kennzeichnen mindestens der passiven Komponenten mit einem Identifikationscode,
- Abfragen einer oder jeder passiven Komponente nach dem aktuellen BelegungsZustand mittels eines Schnittstellenmoduls,
- Umsetzen der Informationen aus der Abfrage in Datenbanken und
- Anzeigen der Informationen in einem gewünschten Format.

Dadurch wird gewährleistet, daß zusätzlich zu den ohnehin identifizierbaren aktiven Komponenten auch die passiven Komponenten erkannt und zugeordnet werden können. Die Netzwerkstruktur mit einer beliebigen Anzahl von Enddosen läßt sich sich einfach überwachen und dokumentieren, ohne daß die Enddosen vor Ort in Augenschein genommen werden müssen. Vielmehr läßt sich die Netzstruktur vom zentralen Rechenzentrum oder auch an jedem anderen beliebigen Ort abbilden.

Des weiteren wird die Aufgabe durch eine Vorrichtung der eingangs erwähnten Gattung dadurch gelöst, daß mindestens an den unbelegten Anschlüssen des oder jedes Patchfeldes programmierbare Bauelemente vorgesehen sind, daß mindestens in der oder jeder nicht belegten Enddose programmierbare Bauelemente vorgesehen sind, wobei das oder jedes Patchfeld und die oder jede Enddose über Bussysteme untereinander und mit einer Einheit zum Aufnehmen und/oder Auswerten der von den programmierbaren Bauelementen aufgenommenen Daten verbunden sind. Dadurch werden die passiven Komponenten erkennbar, da eine Abfrage des aktuellen Belegungs-Zustandes ermöglicht ist, selbst wenn eine Enddose nicht belegt ist. Durch die Zuordnung von Datenanschluß einerseits und Codierung der programmierbaren Bauelemente andererseits läßt sich im übergeordneten Management direkt verfolgen, zu welchen Anschluß und damit zu welchem Raum die passive Verbindung führt.

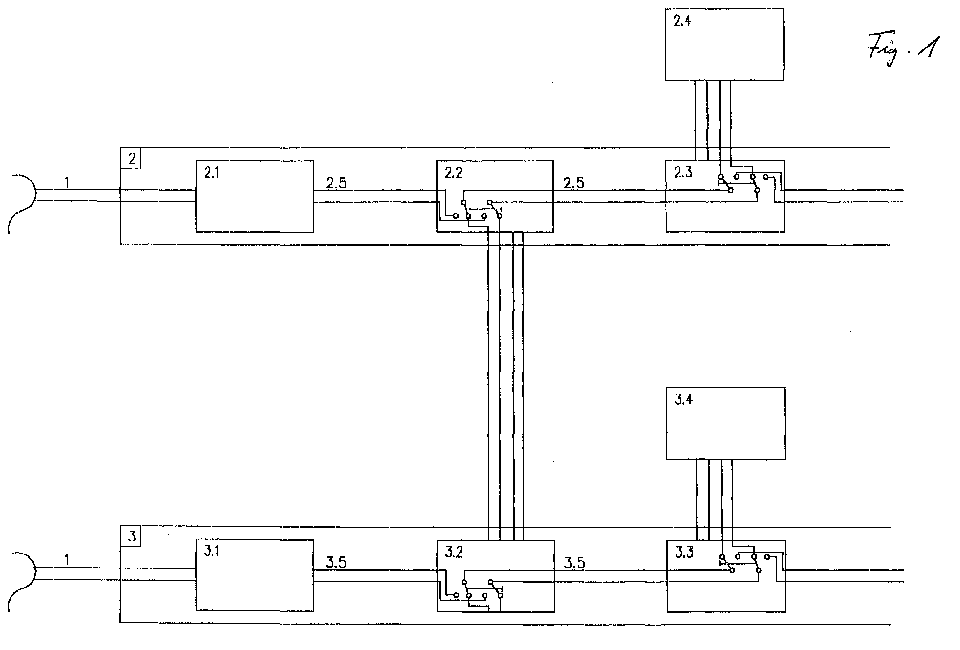

Weitere Ausführungsformen und Merkmale der Erfindung sind den Unteransprüchen und der Beschreibung zu entnehmen. Ein besonders bevorzugtes Ausführungsbeispiel wird anhand der Figur 1 näher erläutert.

Das Verfahren und die zur Durchführung des Verfahrens erforderliche Vorrichtung dienen zum Erkennen von Belegungen (aktive Komponente) und Nichtbelegungen (passive Komponente) in einer Netzwerkstruktur. Figur 1 zeigt eine erfindungsgemäße Vorrichtung bzw. einen Ausschnitt aus einer Netzwerkstruktur. Ziel ist insbesondere das Erkennen von nicht aktiven Endgeräteanschlüssen durch Einsatz eines ID-Chips mit entsprechender Auswerteeinheit und Durchverbindung der offenen Leitungsnetze. Sämtliche nicht belegten Steckplätze eines Patchfeldes werden durch einen Zweidrahtbus miteinander verbunden. Jeder unbelegte Anschluß einer Endgerätedose wird durch einen ID-Chip mit einer Identifikationsnummer abgeschlossen. Hierbei erfolgt die Spannungsversorgung der ID-Chips über den Zweidrahtbus. Durch die Zuordnung von Datenanschluß und Identifikationsnummer läßt sich im Managementsystem direkt verfolgen, zu welchem Raum die passive Verbindung führt. Eine aufwendige Dokumentation mit dem Erfordernis der ständigen Aktualisierung kann somit entfallen.

Jeder freie Steckplatz des Patchfeldes erhält einen adressierbaren Zweidraht-Weichenbaustein. Der Zweidrahtbus führt in einem Verteilerschrank auf ein Kommunikationsmodul mit herkömmlichem Datenanschluß (z.B. Ethernet). Das Modul steuert die Weichen und liest die Identifikationsnummern zyklisch ein. Aus den erreichbaren Identifikationsnummern werden die bestehenden Verbindungen ermittelt und durch die Managementsoftware abgebildet.

Folgende Komponenten sind für die Realisierung erforderlich:

Im Verteiler ist ein Zentralmodul mit Zweidrahtbusanschluß und Datennetzanschluß vorgesehen. Dies kann aber je nach Anwendungsfall auch beliebig erweitert werden.

Mindestens in jedem freien Patchfeldanschluß ist ein Weichenmodul mit einem ID-Chip mit Zweidrahtanschluß vorhanden. Das Weichenmodul weist eine Signalaufbereitung auf und verfügt über zwei digitale Eingabe- und Ausgabeports. Je Endgerätedose ist ein ID-Chip mit Identifikationsnummer und Zweidrahtanschluß und einer Kurzschlußbrücke zwischen dem PIN 3 und PIN 4 vorgesehen.

Bei der gewählten Lösung werden folgende Betriebsfälle erkannt:
■ das Ende einer Datenleitung liegt auf einer Netzwerkkarte eines Endgerätes oder auf einem aktiven Port im gleichen oder einem anderen Verteiler
■ das Ende einer Datenleitung führt auf einen Steckplatz eines Verteilers, der durch einen Zweidraht- Weichenbaustein abgefragt wird
■ das Ende einer Datenleitung liegt auf einer Datenendgerätedose mit einem Zweidraht- Endgerätebaustein (Hintergrundinformation:
   - Netzwerkkarten verarbeiten nur differentielle Signale, das Potential auf den Datenleitungen "schwebt"
   - an den Weichenbausteinen und Endgerätebausteinen sind die Leitungen 3 und 4 durch Pull- Down- Widerstände mit einem LOW-Pegel belegt
   - der Zweidrahtbus ist am Ende mit einem Widerstand abgeschlossen)

- **Schritt 1:**: sämtliche Weichen werden so eingestellt, dass der am Ende des Zweidrahtbusses liegende Widerstand an den Eingang des Zentralmoduls geschaltet ist (Wichtig: wird dieser Schritt nicht ausgeführt, so blockiert eventuell das Datensignal einer aufgeschalteten Netzwerkkarte den Bus, so dass dieser durch den Zweidrahtbus nicht mehr abfragbar ist).
- **Schritt 2:**: vom ersten Weichenbaustein wird der PIN 4 des RJ45 Steckers eingelesen:
- HIGH- Pegel (dieser kann nur von einem bereits abgefragten ID- Chip kommen; somit handelt es sich um die Verzweigung zu einem durch den Zweidrahtbus abgefragten Steckplatz des gleichen oder eines anderen Verteilers.
   Die Weiche wird umgestellt und über diese Weiche werden alle erreichbaren ID- Nummern eingelesen.
   Nach dem Rückstellen der Weiche erfolgt die Abfrage der nächsten
   Weiche innerhalb des Verteilers.
- LOW- Pegel (die Leitung geht entweder zu einer Netzwerkkarte oder einem Endgerät- ID- Chip.
Um eine Unterscheidung zu treffen wird an PIN 4 ein HIGH- Pegel ausgelesen und am PIN 3 eingelesen:
*HIGH- Pegel:* *- PIN 3 und PIN 4 sind kurzgeschlossen, daraus folgt, dass am anderen Ende ein ID- Chip liegt. Es wird durch den Weichenbaustein eine Verbindung zum ID- Chip derEndgerätedose hergestellt und die Kennung vom Zentralmodul eingelesen. Nach dem Rückstellen der Weiche erfolgt die Abfrage der nächsten Weiche innerhalb des Verteilers.*
*LOW- Pegel:* *- PIN 3 und PIN 4 sind unabhängig voneinander*, *daraus folgt: am anderen Leitungsende liegt eine Netzwerkkarte. Ohne die Weiche umzustellen erfolgt die Abfrage der nächsten Weiche.*

Der Vorgang wird wiederholt bis alle Weichen abgefragt sind. Anschließend werden die doppelten ID- Nummern (ID- Nummern in einem Fremdverteiler können über mehrere Wege erreicht werden) im Zentralmodul beseitigt.

Aus den sich überschneidenden Identifikationsnummern, die durch Schalten einer Weiche erreichbar waren, lässt sich ermitteln, welche Verteiler- Verteiler-Verbindungen bestehen.

Jede ID- Nummer wird in eine fiktive MAC- Adresse umgesetzt (aus Sicht des Managementsystems besteht somit kein Unterschied ob sich um eine herkömmliche Komponente mit automatischer Erkennung in das Netz "einklinkt" oder das Zentralmodul mit einer Reihe angeschlossener ID- Chips).
Somit können unbeschaltete bzw. nur einseitig aufgelegte Datenverbindungen angezeigt werden, ohne dass Eingriffe in der Managementsoftware erforderlich sind.

Wird eine Leitung neu gepacht, so entspricht auch hierbei der Ablauf dem der automatischen Erkennung von herkömmlichen Netzwerkkomponenten.

Die beschriebenen Funktionen beziehen sich auf Kupferverkabelungen, das gleiche Prinzip ist auf Netze mit Lichtwellenleiter anwendbar.

Die Erfindung ist aber nicht auf die beschriebenen Beispiele beschränkt. Vielmehr sind diverse andere Anbindungen und Strukturen möglich. So können beispielsweise auch mehrere Server mit mehreren Patchfeldern verbunden sein. Auch die aktiven Komponenten können mit den programmierbaren Bauelementen versehen sein. So ist insbesondere zum Nachrüsten die Anordnung der programmierbaren Bauelemente im Bereich von Anschlußkabeln denkbar. Bei Neugestaltungen können die Bauelemente auch im Patchfeld oder den Enddosen integriert sein. Es können einzelne oder auch alle Anschlüsse mit entsprechenden Bauelementen ausgestattet sein. Gleiches gilt für die Enddosen. Auch für die Bussysteme sind andere als die beschriebenen Zweidrahtbussysteme verwendbar.

Neben dem allgemein beschriebenen Verfahren, bei dem die von den passiven Komponenten abgefragten direkt einer Datenbank zugeführt und dort aufbereitet werden, besteht auch die Möglichkeit, die Informationen vor dem Umsetzen auf die Datenbanken einer übergeordneten Protokollebene zuzuführen.
- 1: Buskabel zum Verteiler (z. B. Ethernet- Bus- Anbindung)

- **2**: **Patchfeld im Verteiler 1**
- 2.1: Schnittstellenmodul für 2 Draht- Bus im Verteiler 1
- 2.2: Weichenbaustein mit ID- Chip (Verbindung zu Patchfeld im Verteiler 2)
- 2.3: Weichenbaustein mit ID- Chip (Verbindung zu einer Enddose)
- 2.4: Enddose mit ID- Chip (Verbindung zu Patchfeld im Verteiler 1)
- 2.5: 2- Draht- Bus im Verteiler 1

- **3**: **Patchfeld im Verteiler 2**
- 3.1: Schnittstellenmodul für 2 Draht- Bus im Verteiler 2
- 3.2: Weichenbaustein mit ID- Chip (Verbindung zu Patchfeld im Verteiler 1)
- 3.3: Weichenbaustein mit ID- Chip (Verbindung zu einer Enddose)
- 3.4: Enddose mit ID- Chip (Verbindung zu Patchfeld im Verteiler 2)
- 3.5: 2- Draht- Bus im Verteiler 2

## Patentansprüche

1. Verfahren zur Erkennung von aktiven und passiven Komponenten, insbesondere im Bereich von Netzwerken, **gekennzeichnet durch** folgende Verfahrensschritte:
- Kennzeichnen mindestens der passiven Komponenten mit einem Identifikationscode,
- Abfragen einer oder jeder passiven Komponente nach dem aktuellen BelegungsZustand mittels eines Schnittstellenmoduls,
- Umsetzen der Informationen aus der Abfrage in Datenbanken und
- Anzeigen der Informationen in einem gewünschten Format.

2. Verfahren nach Anspruch 1, **dadurch gekennzeichnet, daß** die Informationen des Schnittstellenmoduls vor dem Umsetzen in Datenbanken an eine übergeordnete Protokollebene weitergeleitet werden.

3. Verfahren nach Anspruch 1 oder 2, **dadurch gekennzeichnet, daß** alle aktiven und passiven Komponenten mit einem Identifikationscode versehen werden.

4. Verfahren nach einem der Ansprüche 1 bis 3, **dadurch gekennzeichnet, daß** die oder jede Komponente mit einem alphanumerischen Code versehen wird.

5. Verfahren nach einem der Ansprüche 1 bis 4, **dadurch gekennzeichnet, daß** die Abfragen zeitlich variabel durchgeführt werden.

6. Vorrichtung zur Erkennung von aktiven und passiven Komponenten, insbesondere im Bereich von Netzwerken, im wesentlichen umfassend mindestens einen Server, mindestens ein Weichenelement zur Anbindung von mindestens vier Enddosen an den Server sowie ein Patchfeld mit mehreren Anschlüssen, **dadurch gekennzeichnet, daß** mindestens an den unbelegten Anschlüssen des oder jedes Patchfeldes programmierbare Bauelemente vorgesehen sind, daß mindestens in der oder jeder nicht belegten Enddose programmierbare Bauelemente vorgesehen sind, wobei das oder jedes Patchfeld und die oder jede Enddose untereinander und mit einer Einheit zum Aufnehmen und/oder Auswerten der von den programmierbaren Bauelementen aufgenommenen Daten über Bussysteme verbunden sind.

7. Vorrichtung nach Anspruch 6, **dadurch gekennzeichnet, daß** jede Enddose mit einem Anschluß eines Patchfeldes über ein Bussystem verbunden ist.

8. Vorrichtung nach Anspruch 6 oder 7, **dadurch gekennzeichnet, daß** die unbelegten Anschlüsse des oder jedes Patchfeldes untereinander mit einem Bussystem verbunden sind.

9. Vorrichtung nach einem der Ansprüche 6 bis 8, **dadurch gekennzeichnet, daß** das oder jedes programmierbare Bauelement im Bereich des Patchfeldes als programmierbare Weiche ausgebildet ist.

10. Vorrichtung nach Anspruch 9, **dadurch gekennzeichnet, daß** die Weiche in der Buchse des Patchfeldes integriert ist.

11. Vorrichtung nach Anspruch 9 oder 10, **dadurch gekennzeichnet, daß** jedem Anschluß eines Patchfeldes eine Weiche zugeordnet ist.

12. Vorrichtung nach Anspruch 9, **dadurch gekennzeichnet, daß** die Weiche in einem Steckerelement eines Anschlußkabels angeordnet ist.

13. Vorrichtung nach einem der Ansprüche 9 bis 12, **dadurch gekennzeichnet, daß** die Weiche mit einem Identifikationscode versehen ist.

14. Vorrichtung nach Anspruch 6, **dadurch gekennzeichnet, daß** das oder jedes programmierbare Bauelement in der oder jeder Enddose als programmierbarer Chip ausgebildet ist.

15. Vorrichtung nach Anspruch 14, **dadurch gekennzeichnet, daß** der Chip in die Enddose integriert ist.

16. Vorrichtung nach Anspruch 14, **dadurch gekennzeichnet, daß** der Chip in einem Steckerelement eines Anschlußkabels angeordnet ist.

17. Vorrichtung nach einem der Ansprüche 14 bis 16, **dadurch gekennzeichnet, daß** der oder jeder Chip mit einem Identifikationscode versehen ist.

18. Vorrichtung nach einem der Ansprüche 6 bis 17, **dadurch gekennzeichnet, daß** das oder jedes Bussystem mindestens als 2-Drahtbus ausgebildet ist.
